# EUROPÄISCHE PATENTSCHRIFT

(11) **EP 0 714 154 B1**
(45) Veröffentlichungstag und Bekanntmachung des Hinweises auf die Patenterteilung: **16.05.2001**
(21) Anmeldenummer: 95117367.3
(22) Anmeldetag: 04.11.1995
(51) Int. Cl.: H01R 39/41, H02K 5/14

(54) **Bürstenhalter für einen Elektromotor**
Brush holder for an electric motor
Porte-balais pour moteur électrique

(30) Priorität: 24.11.1994 DE 4441891; 23.06.1995 DE 19522828
(43) Veröffentlichungstag der Anmeldung: 29.05.1996
(73) Patentinhaber: VORWERK & CO. INTERHOLDING GmbH, 42275 Wuppertal (DE)
(72) Erfinder: Pirdzuns, Rolf, D-42115 Wuppertal (DE); Jacobs, Carsten, Dr., D-45549 Sprockhövel (DE); Müller, Manuela, D-45549 Sprockhövel (DE); Arnold, Hans-Peter, D-42489 Wuppertal (DE)
(74) Vertreter: Müller, Enno, Dipl.-Ing.

(56) Entgegenhaltungen:
- EP-A- 0 101 546
- EP-A- 0 554 171
- DE-A- 2 450 574
- US-A- 3 510 708
- US-A- 3 656 018
- US-A- 3 967 148
- US-A- 4 590 398

## Beschreibung

Die Erfindung betrifft einen Elektromotor nach den Merkmalen des Oberbegriffes des Anspruches 1.

Derartige Elektromotoren sind beispielsweise in Haushaltsgeräten, wie Küchenmaschinen, Staubsaugern und dergleichen eingesetzt.

Zum Stand der Technik ist etwa auf die US-Patentschriften 3,510,708, 3,656,018, 4,590,398 und 3,967,148 zu verweisen.

Beim Gegenstand der letztgenannten Druckschrift ist oberhalb der Aufnahmeführung für die Kohlenbürste eine weitere Aufnahmeführung für ein Kontaktelement ausgebildet. Jedoch ist dieses bekanntere Kontaktelement noch nicht rationell montierbar. Es ist eine Schuhverbindung zur Kontaktierung vorgesehen. Diese muß nach Einschieben des Kontaktelementes in die Kontaktstellung aufgebracht werden.

Ausgehend von dem genannten Stand der Technik beschäftigt sich die Erfindung mit der technischen Aufgabe, einen Elektromotor, wie eingangs angegeben, so auszugestalten und weiterzubilden, daß eine elektrisch sichere, jedoch einfache und rationelle Montage ermöglicht ist.

Diese Aufgabe ist beim Gegenstand des Anspruches 1 gelöst, wobei auf die Merkmale des Kennzeichnungsteils des Anspruches 1 abgestellt ist. Das Kontaktelement kann in einer gesonderten Aufnahmeführung, die statorseitig die Aufnahmeführung für die Kohlenbürste ausgebildet ist, eingeschoben werden und durch das Einschieben selbst ergibt sich aufgrund des eine Auflaufschräge aufweisenden Kontaktteils der gewünschte elektrische Kontakt. Der auf der Statorwicklung angeordnete Gegenkontakt, das Kontaktteil, ist motorfest. In weiterer Einzelheit ist vorgesehen, daß die Bereitschaftsstellung und/oder die Kontaktstellung des Kontaktelementes verrastbar ist. Bevorzugt sind beide Stellungen verrastbar, jedoch derart, daß aus der Bereitschaftstellung nur eine Verschiebung in die Kontaktstellung möglich ist. Ein Verschieben in die Gegenrichtung kann bspw. durch ein widerhakenartiges, an dem Kontaktelement ausgebildetes Teil, verhindert werden. Im einzelnen ist die Kohlenbürste auch bevorzugt über eine Druckfeder mit dem Kontaktelement verbunden, wobei sich die Druckfeder im wesentlichen parallel zu einer Kontaktfläche des Kontaktelementes erstreckt. Die angesprochene vorverbundene Einheit aus Kontaktelement und Druckfeder entspricht somit einem langgestreckten, jedenfalls an seiner Unterseite bzw. an seiner dem Gegenkontakt zugeordneten Seite elektrisch leitfähigen verschiebbaren Teil, zu welchem im wesentlichen parallel und verbunden durch die Druckfeder die Kohlenbürste angeordnet ist. Darüber hinaus ist die Kohlenbürste noch über ein Kohleseil mit dem Kontaktelement verbunden. Das Kohleseil ist speziell ein Kupferseil. Im einzelnen kann das Kontaktelement aus einem Flachblechteil bestehen, das einendig eine etwa rechtwinklige Abwinklung aufweist, wobei die Druckfeder über das Kohleseil mit der Abwicklung des Flachblechteils verbunden ist. In der Kontaktstellung wirkt das Kontaktelement mit einem unter Federvorspannung stehenden Kontaktteil, welches ein Teil des Gegenkontaktes ist, zusammen. Das Kontaktteil kann weiter bevorzugt im einzelnen eine Auflauffläche aufweisen, über welche das Kontaktelement im Zuge der Verschiebung aus der Bereitschaftsstellung in die Kontaktstellung mit dem Kontaktteil in Berührung kommt. Dadurch, daß das Kontaktteil federbar ist, kann es ausweichen und eine vollständige Verschiebung des Kontaktelementes in die Kontaktstellung ermöglichen. Eine bevorzugte konstruktive Ausbildung des Kontaktteils sieht in diesem Zusammenhang einen in sich federbaren Kontaktbügel vor. In weiterer Einzelheit ist in dem Aufnahmegehäuse für die Kohlenbürste unterhalb einer Aufnahmeführung für die Kohlenbürste selbst eine zweite Aufnahmeführung für das Kontaktelement ausgebildet. Die Kohlenbürste und das Kontaktelement können in die erste bzw. die zweite Aufnahmeführung jeweils gleichsam schubladenartig eingeschoben werden, wobei die beiden Teile jedoch an dem einen Ende miteinander verbunden sind. Die erste und die zweite Aufnahmeführung sind geeigneterweise durch einen Zwischenboden getrennt. Darüber hinaus ist weiter bevorzugt in dem Aufnahmegehäuse ein weiterer Boden für die zweite Aufnahmeführung vorgesehen, welcher Boden zugeordnet einem rotor- bzw. kommutatorseitigen Ende des Aufnahmegehäuses eine Öffnung aufweist, zur Kontaktierung zwischen dem Kontaktelement und dem motorfesten Kontaktteil. Der Elektromotor, um welchen es hier geht, muß weiter eine Stromversorgung aufweisen. In weiterer Ausgestaltung wird daher auch vorgeschlagen, wobei diese Maßnahme auch unabhängig von der vorstehend erläuterten Maßnahme Bedeutung hat, daß an dem Elektromotor ein Schiebekontakt für die Stromversorgung des Elektromotors ausgebildet ist, bestehend aus einem flächigen Steckerteil in Zusammenwirkung mit einem daran unter Vorspannung anliegenden motorseitigen Kontaktteil. Der Elektromotor weist weiter bevorzugt einen Thermostatschalter auf. Hierzu ist vorgeschlagen, daß der Thermostatschalter in Reihe geschaltet ist bzgl. des Motorstromkreises. Weiter besitzt der Thermostatschalter notwendigerweise einen Temperaturfühler, was in einer Baueinheit zusammengefaßt ist. Der Thermostatschalter bzw. der Temperaturfühler sind in dem Motor oberseitig einer Statorwicklung angeordnet. Wesentlich ist in diesem Zusammenhang, daß der Thermostatschalter einerseits in ein Kontaktteil, welches bei Kontaktierung des Motorstromes in Wirkung tritt, eingebunden ist, andererseits aber steckverbunden ist mit einem weiteren, im Motorraum angeordneten Kontaktterminal. Im einzelnen kann der Thermostatschalter auch in eine Wickelabdeckung des Stators eingerastet sein. Darüber hinaus schlägt die Erfindung auch vor, daß das Aufnahmegehäuse zugleich ein Entstörungselement aufweist. Mit dem Einschieben des Stators in die Motorkapsel kann so gleichzeitig nicht nur die elektrische Verbindung zwischen dem Aufnahmegehäuse, dem Stator und dem Motorstecker erfolgen, sondern zugleich auch die notwendige Entstörung elektrisch eingebunden sein. Hierzu ist vorgesehen, daß das Aufnahmegehäuse zugleich ein Entstörungselement aufweist. An dem Aufnahmegehäuse ist speziell ein Entstörungskondensator gehaltert. Die Halterung ist vorzugsweise derart vorgenommen, daß der Entstörungskondensator einerseits in elektrisch leitender Verbindung zu einem das Aufnahmegehäuse an dem Elektromotor, insbesondere dem Stator, halternden Befestigungselement steht und andererseits in elektrisch leitender Verbindung zu dem Kontaktelement, mit welchem der Kontakt zu der Kohlenbürste herstellbar ist. Auf dem Aufnahmegehäuse kann hierzu weiterhin eine Aufnahmetasche für den Kondensator ausgebildet sein. Ein bspw. knopfartiger Kondensator kann in diese, bspw. mit einer U-förmigen Führung ausgestatteten Tasche eingeschoben werden. Weiterhin kann seitlich zu der Aufnahmetasche auf dem Aufnahmegehäuse eine Schiebersteckeraufnahme für einen Steckerkontakt des Kondensators ausgebildet sein. Die angesprochene elektrisch leitende Verbindung zu dem halternden Befestigungselement kann bspw. durch Einklemmen zwischen ein als Schraube ausgebildetes Befestigungselement und die Schraubenausnehmung in dem Aufnahmegehäuse erfolgen. Darüber hinaus kann es sich bei dem Befestigungselement auch bspw. um einen Blindniet handeln, mit welchem zugleich eine elektrisch leitende Verbindung zu dem Entstörungskondensator festgeklemmt ist. Hinsichtlich des Steckerkontaktes, mit welchem die elektrisch leitende Verbindung zwischen dem Entstörungskondensator und der Kohlenbürste geschaffen ist, kann auch parallel zu der Aufnahmeführung für die Kohlenbürste in dem Aufnahmegehäuse eine Aufnahmeführung für den Steckerkontakt ausgebildet sein.

Nachstehend ist die Erfindung des weiteren anhand der beigefügten Zeichnung, welche jedoch lediglich Ausführungsbeispiele darstellt, erläutert. Hierbei zeigt:
- Figur 1: eine perspektivische explosionsartige Ansicht eines Stators eines Elektromotors und zugeordneten Aufnahmegehäusen für Kohlenbürsten;
- Figur 2: eine teilweise schematische Einbauzeichnung, teilweise geschnitten, eines Elektromotors mit Motorgehäuse und Läufer, mit der Kohlenbürste in einer Bereitschaftsstellung;
- Figur 3: eine Darstellung gemäß Fig. 2 mit der Kohlenbürste in der Kontaktstellung;
- Figur 4: eine perspektivische Darstellung des Aufnahmegehäuses gemäß Fig. 1, jedoch ohne zugehörigen Stator, mit integriertem Entstörungskondensator;
- Figur 5: eine vereinzelte Darstellung des Kontaktelementes der Ausgestaltung gemäß Fig. 4 mit angebundener Kohlenbürste, in Querschnittsdarstellung;
- Figur 6: eine Querschnittsdarstellung des Aufnahmegehäuses in der Ausgestaltung gemäß Fig.6;
- Figur 7: eine vereinzelte Darstellung des Entstörungskondensators; und
- Figur 8: eine Draufsicht auf das Aufnahmegehäuse gemäß Fig. 6.

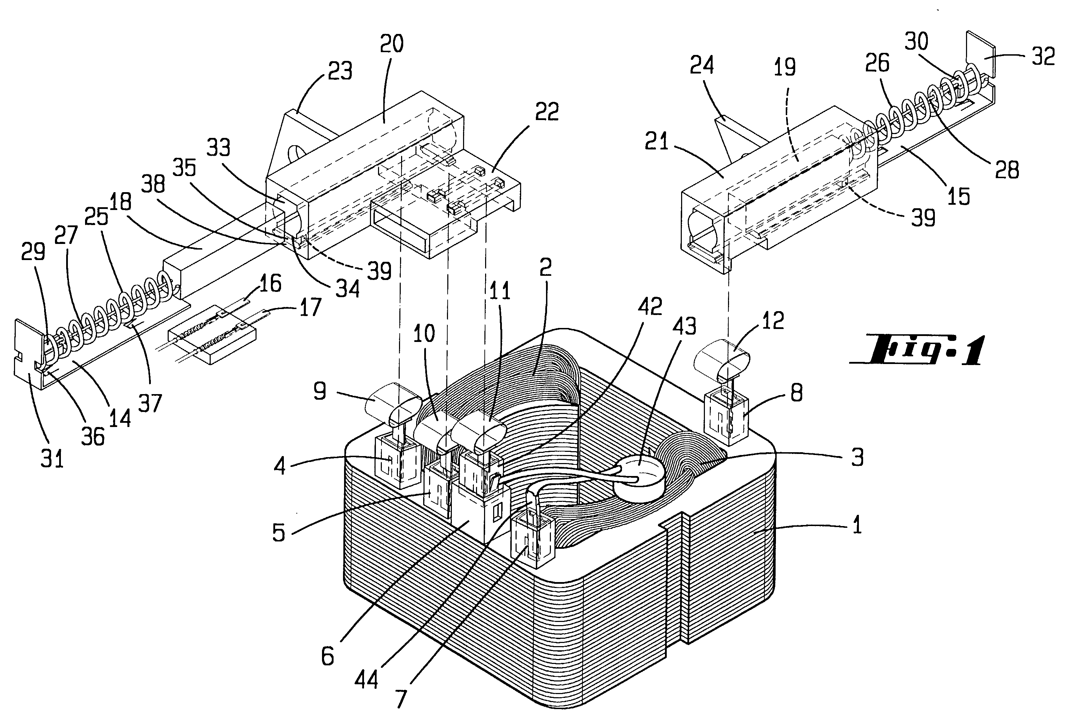

Dargestellt und beschrieben ist, zunächst mit Bezug zu Fig. 1 ein Stator 1 eines Elektromotors mit Statorwicklungen 2, 3. Auf dem Stator 1 sind fest angebracht, bspw. angeklebt, Kontaktterminals 4, 5, 6, 7 und 8 vorgesehen. Beim Ausführungsbeispiel handelt es sich um sogenannte Mag-Mate-Kontaktterminals. Diese stellen in an sich schaltungstechnisch bekannter Weise den Kontakt zu dem Stator bzw. den Statorwicklungen und, wie nachstehend noch näher erläutert, zu dem Thermostat her.

Die Kontaktterminals 4, 5, 6, 7 und 8 weisen weiter je ein Kontaktteil 9, 10, 11 und 12 auf. Ein Kontaktteil besteht aus einem geeigneten, elektrisch leitfähigen Material. Insbesondere kann dies Kupferblech sein. Ein Kontaktteil besitzt weiter unterseitig ein schwertartiges, in das zugehörige Kontaktterminal einsteckbares Teil, wobei oberseitig eine federbare Bügelausformung vorgesehen ist. Im einzelnen ist die Bügelausformung durch eine schlaufenartige Wicklung des Kupferbleches erreicht.

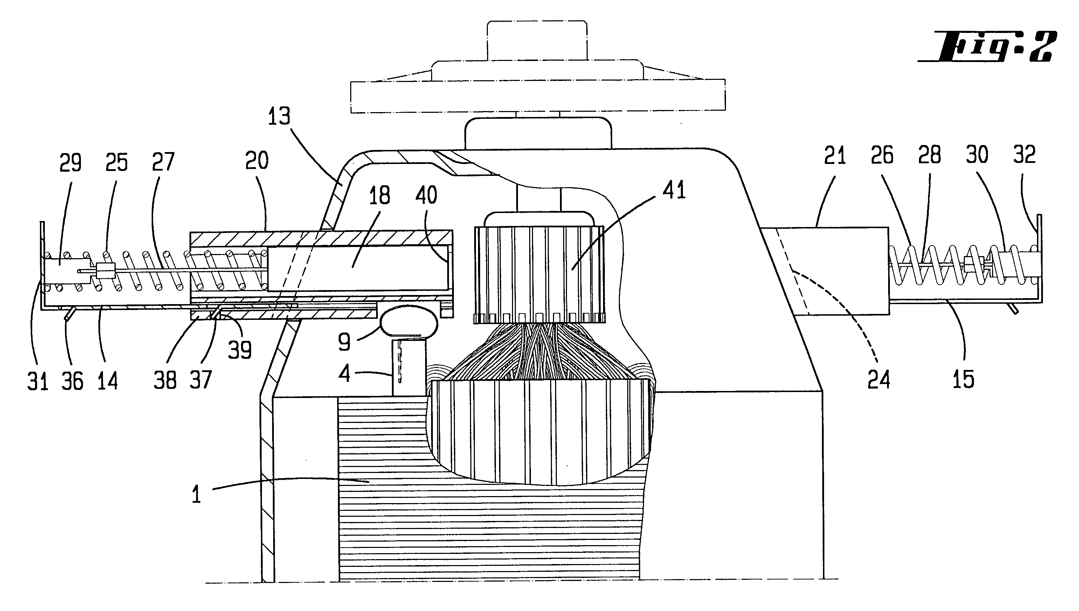

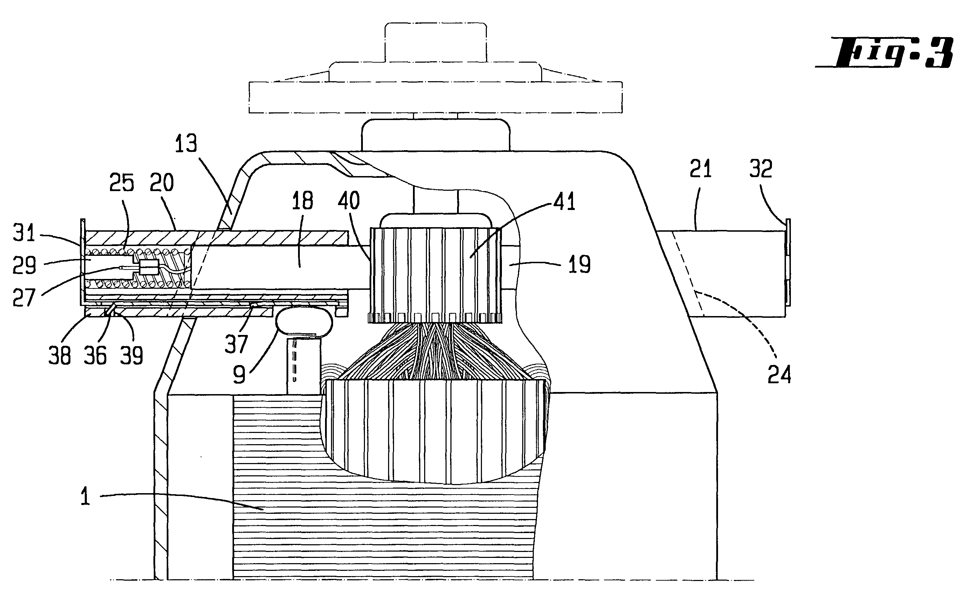

Der Stator kann mit den dargestellten Kontaktterminals und Kontaktteilen als vorgefertigtes bzw. vormontiertes Bauteil zur Verfügung gestellt werden, welches bei der Montage in das Motorgehäuse 13 (vgl. Fig. 2 und 3) eingeschoben wird.

Bei diesem Einschieben kommen die Kontaktteile 9 bis 12 in Kontakt mit zugehörigen Kontaktelementen 14, 15 und 16, 17.

Die Kontaktelemente 14 und 15 stellen den Kontakt zu Kohlenbürsten 18, 19 her. Die Kohlenbürsten 18, 19 sind in Aufnahmegehäusen 20, 21 aufgenommen.

An das Aufnahmegehäuse 21 für die Kohlenbürste 18 ist ein weiteres Motorkontakt-Aufnahmegehäuse 22 angebunden bzw. ist das Aufnahmegehäuse 21 unmittelbar einstückig mit dem Motorkontakt-Aufnahmegehäuse 22 hergestellt. Darüber hinaus weisen die Aufnahmegehäuse 19 bzw. 20 Montageflansche 23 und 24 auf, welche beim Ausführungsbeispiel abweichend von einem rechten Winkel zur Längserstreckung der Aufnahmegehäuse 19, 20 verlaufen, was sich aus der Einbausituation ergibt, wie sie nachstehend noch in Bezug auf Fig. 2 erläutert ist.

Wesentlich ist, daß die Kohlenbürsten 18, 19 über Druckfedern 25, 26 und Kohleseile 27, 28 mit dem Kontaktelement 14 bzw. 15 verbunden sind. Während die Druckfedern auf eine Kontaktzunge 29 bzw. 30 des Kontaktelementes 14, 15 bspw. aufgeschoben sind, sind die Kohleseile 27, 28 vorzugsweise mit einem Abschnitt der Kontaktzunge 29 bzw. 30 des Kontaktelementes 14 bzw. 15 vercrimpt.

Das Kontaktelement 14 bzw. 15 besteht aus einem langgestreckten, sich im wesentlichen parallel zu der Kohlenbürste 18 bzw. 19 erstreckenden Hauptteil und einer hierzu im wesentlichen rechtwinklig verlaufenden Abwinklung 31 bzw. 32. In dem Aufnahmegehäuse 19 bzw. 20 ist zunächst eine erste, obere Aufnahmeführung 33 vorgesehen, welche in ihrer Geometrie bereits bekannten Aufnahmeführungen für Kohlenbürsten entspricht. Unterhalb der ersten Aufnahmeführung 33 und getrennt durch einen Zwischenboden 34 ist eine zweite Aufnahmeführung 35 für das Kontaktelement 14 bzw. 15 in dem Aufnahmegehäuse 20 vorgesehen.

Das Kontaktelement 14 bzw. 15 weist weiter, vgl. Fig. 2, nach unten abragende und im Hinblick auf die Einschieberichtung widerhakenartig ausgebogene Rastfortsätze 36, 37 auf. In dem Aufnahmegehäuse 20 bzw. 21 ist weiterhin ein Boden 38 ausgebildet, welcher die zweite Aufnahmeführung 35 nach unten begrenzt. In dem Aufnahmeboden 38 ist darüber hinaus eine Rastöffnung 39 ausgebildet, in welcher - in Einschieberichtung - ein erstes Rastteil 37 zunächst zur Festlegung einer Bereitschaftsstellung einrasten kann.

Bei der Darstellung gemäß Fig. 2 ist der Stator 1 in das Motorgehäuse 13 des Elektromotors eingeführt und der Läufer des Elektromotors auch bereits im Inneren des Stators angeordnet und montiert. Im Zuge des Einführens des Stators 1 in das Motorgehäuse 3, an welchem auch bereits die Aufnahmegehäuse 20 bzw. 21 für die Kohlenbürsten 18 und 19 montiert sind, kommen die Kontaktteile - in Fig. 2 ist ausgewählt das Kontaktteil 9 dargestellt - in eine Kontaktbereitschaftsstellung bzgl. der Kontaktelemente 14 bzw. 15. In gleicher Weise kommen auch die Kontaktteile 10 und 11 in eine Kontaktbereitschaftsstellung bzgl. der Kontaktelemente 16 und 17 des Motorsteckers.

In der dargestellten Bereitschaftsstellung gemäß Fig. 2 ist die Kohlenbürste 18 in das Aufnahmegehäuse 20 eingeführt und das Kontaktelement 14 in der Bereitschaftsstellung, wie beschrieben, verrastet. Ein vorderes Ende 40 der Kohlenbürste 18 befindet sich noch innerhalb des Aufnahmegehäuses 20 und in Abstand zu dem Kommutator 41.

Wie aus Fig. 3 ersichtlich wird sodann das Kontaktelement 14 vorgeschoben, was durch einfaches Drücken auf die Abwinklung 31 erreicht werden kann. Ein vorderes Ende des Kontaktelementes 14 überfährt hierbei den in die Verschiebebahn des Kontaktelementes 14 ragenden Bügel des Kontaktteiles 9, so daß dieses in federnder kontaktierender Anlage zu dem Kontaktelement 14 kommt. Die so erreichte Kontaktstellung des Kontaktteiles 14 ist durch den Vorsprung 36, der in die Aussparung 39 des Aufnahmegehäuses 20 eingreift, gesichert.

In gleicher Weise sind die Kontaktteile 10 und 11 den Kontaktelementen 16 und 17 des Motorsteckers zugeordnet. Bei den Kontaktelementen 16 und 17 handelt es sich insoweit um an sich bekannte Flachsteckerzungen. Diese Kontaktierung erfolgt bevorzugt nach den wie vorstehend erläuterten Montageschritten. Auch hierbei wird im Zuge des Einführens der Kontaktelemente 16 und 17 eine federnde Ausweichung der Kontaktteile 10 und 11 erreicht und somit ein unter Federvorspannung stehender Kontaktschluß zwischen diesen Teilen. Abweichend von der zeichnerischen Darstellung kann die Aufnahmeführung 45 für die Kontaktelemente 16 und 17 bzw. den Kontaktelementeblock 46, in welchem diese zusammengefaßt sind, auch weiter nach vorne gezogen sein, etwa auf die Ebene der Öffnung der Aufnahmeführung 33, dies um eine Blindmontage weiter zu begünstigen.

Bezüglich des Kontaktterminals 6 (s. Fig. 1) ist die Besonderheit gegeben, daß lediglich eine untere Aufnahme vorgesehen ist, in welche Aufnahme ein eigentlicher Mag-Mate-Kontakt 42 rastend eingeschoben wird, mit welchem Kontakt ein Ende des Thermostatschalters 43 verbunden ist. Der Stromkreislauf ist somit an dieser Stelle gegenüber dem Stator 1 isoliert, so daß der Strom, entsprechend einer Reihenschaltung, durch den Thermostatschalter 43 geht und sodann in das Terminal 7, über den an den Thermostatschalter weiterhin ausgebildeten Flachstecker 44. Der Thermostatschalter 43 kann desweiteren, was im einzelnen nicht dargestellt ist, in einer Wickelabdeckung der Statorwicklung 3 einrastbar sein bzw. eingerastet sein.

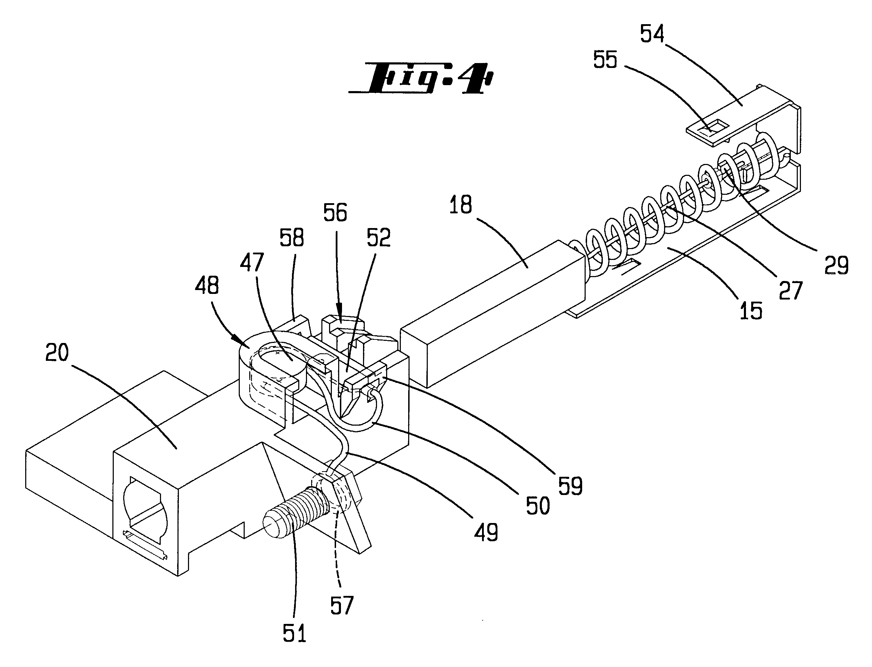

In Figur 4 ist eine weitere perspektivische Darstellung, gegenüber Figur 1 von der entgegengesetzten Seite, eines Aufnahmegehäuses 20 dargestellt, wobei dieses Aufnahmegehäuse 20 zusätzlich einen Entstörungskondensator 47 aufweist. Der Entstörungskondensator 47 ist oben auf dem Aufnahmegehäuse in einer zur Seite hin offenen U-förmigen Führung 48 aufgenommen. Der im Grundriß kreisförmige, knopfartige Entstörungskondensator 47 kann entsprechend seitlich in die Aufnahmeführung 48 eingeschoben werden. Der Entstörungskondensator 47 besitzt zwei elektrische Anschlüsse 49 und 50. Der elektrische Anschluß 49 ist mit dem beim Ausführungsbeispiel als Schraube 51 dargestellten Befestigungselement in leitendem Kontakt. Mittels der Schraube 51 wird das Aufnahmegehäuse 20, wie in Figur 2 auch angedeutet, an dem Motorgehäuse 13 befestigt. Es können auch andere Befestigungselemente vorgesehen sein, bspw. ein Blindniet.

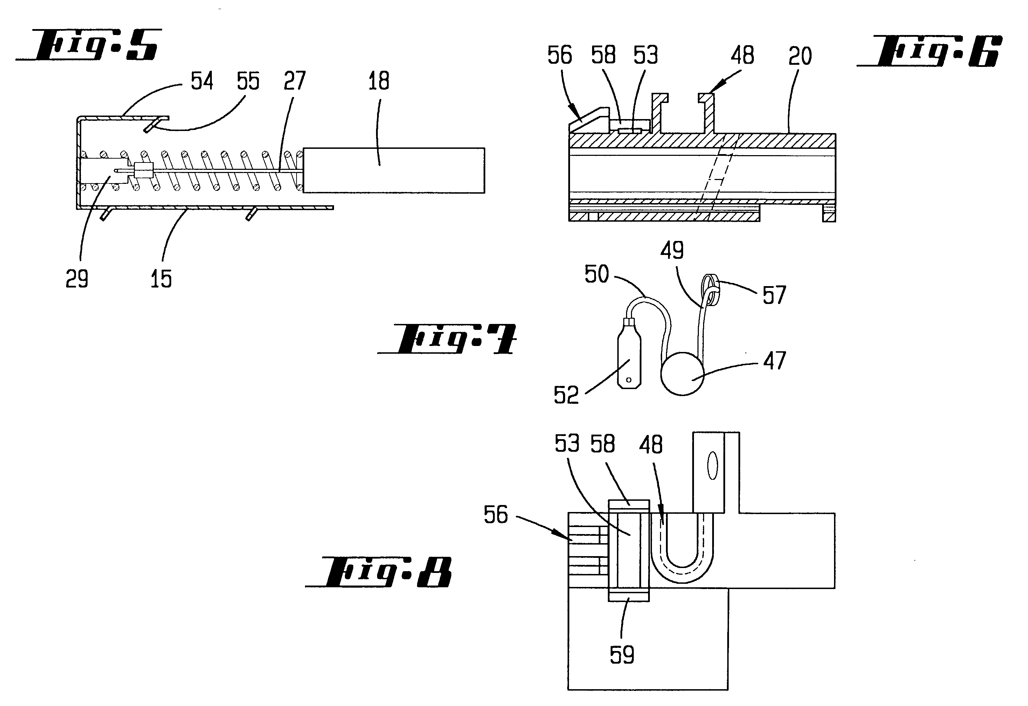

Die weitere elektrisch leitende Verbindung 50 des Entstörungskondensators 47 endet in einem Flachstecker 52, der in einer Flachsteckerführung 53 aufgenommen ist. Die Flachsteckerführung 53 erstreckt sich beim Ausführungsbeispiel auch oben auf dem Aufnahmegehäuse 20, quer zur Verschieberichtung der Kohlenbürste 18. Weiter ist bei dem in Figur 4 dargestellten Ausführungsbeispiel vorgesehen, daß das Kontaktelement 15 einen Kontaktarm 54 aufweist, der im einzelnen noch einen nach unten ausgebogenen Kontaktvorsprung 55 aufweist. Im montierten Zustand fährt der Kontaktarm 54 in eine Führung 56, derart, daß der Kontaktvorsprung 55 in elektrisch leitende Verbindung, durch Auflage von oben, mit dem Flachstecker 52 kommt. So ist eine elektrisch leitfähige Verbindung zwischen dem Entstörungskondensator 47 und der Kohlenbürste 18 im Montagezustand hergestellt. Weitere Einzelheiten sind aus den Figuren 5 bis 8 zu entnehmen. Figur 5 zeigt im einzelnen, in der Querschnittsdarstellung, das Kontaktelement 15 mit dem Kontaktarm 54 und dem nach unten ragenden Kontaktvorsprung 55. Beim Ausführungsbeispiel ist dieses Element aus einem insgesamt U-förmigen Blechteil gebogen. Dieses Blechteil weist auch integriert die Kontaktzunge 29 auf, an welche das aus Kupfer bestehende Kohleseil 27 angecrimpt ist.

Aus der Querschnittsdarstellung der Figur 6 ist der Aufbau der U-förmigen Aufnahmetasche 48 für den Entstörungskondensator 47 zu erkennen. In nach vorne versetzter Nebeneinanderanordnung dazu die Querschiebeaufnahme für den Flachstecker 52.

Die Darstellung gemäß Figur 7 zeigt den Entstörungskondensator 47 in vereinzelter Darstellung. Insbesondere ist ein Kontaktring 57 zu erkennen, welcher die elektrische Kontaktierung mit dem Befestigungselement, bspw. der Schraube 51, erleichtert.

Figur 8 zeigt eine Draufsicht auf das Aufnahmegehäuse 20. In der Zusammenschau mit Figur 6 sind auch die Portale 58, 59 zu erkennen, welche der Halterung des Flachsteckers 52 dienen.

## Patentansprüche

1. Elektromotor mit einer ein Aufnahmegehäuse (20, 21) aufweisenden Aufnahmeanordnung für eine Kohlenbürste (18, 19), in welchem Aufnahmegehäuse die Kohlenbürste (18, 19) in einer Aufnahmeführung (33) längsverschiebbar ist, wobei ein langgestrecktes, mit der Kohlenbürste (18, 19) in elektrisch leitender Verbindung stehendes Kontaktelement (14, 15) vorgesehen ist, das in der Kontaktstellung mit einem Kontaktteil (9, 12) zusammenwirkt und in dem Aufnahmegehäuse (20, 21) halterbar ist , wobei weiter das Aufnahmegehäuse (20, 21) eine zweite Aufnahmeführung (34) für das Kontaktelement (14, 15) aufweist, dadurch gekennzeichnet, daß die zweite Aufnahmeführung (34) unterhalb der ersten Aufnahmeführung (33), zugewandt dem auf der Statorwicklung angeordneten Kontaktteil (9, 12), angeordnet ist und daß durch Verschieben des Kontaktelementes (14, 15) aus einer Bereitschaftsstellung in eine Kontaktstellung ein Kontakt zu dem eine Auflauffläche aufweisenden Kontaktteil (9, 12) hergestellt ist.

2. Elektromotor nach Anspruch 1, dadurch gekennzeichnet, daß das aus einem Flachblechteil bestehende Kontaktelement einendig eine etwa rechtwinklige Abwinklung (31, 32) aufweist, wobei eine Druckfeder (25, 26) und/oder ein Kohleseil (27, 28) mit der Abwinklung (31, 32) verbunden ist.

3. Elektromotor nach einem der vorhergehenden Ansprüche, dadurch gekennzeichnet, daß das Kontaktteil (9, 12) unter Federvorspannung steht.

4. Elektromotor nach Anspruch 3, dadurch gekennzeichnet, daß das Kontaktteil (9, 10, 11, 12) einen in sich federbaren Kontaktbügel aufweist.

5. Elektromotor nach einem der vorhergehenden Ansprüche, dadurch gekennzeichnet, daß die erste und zweite Aufnahmeführung (33, 35) durch einen Zwischenboden (34) getrennt sind.

6. Elektromotor nach einem der vorhergehenden Ansprüche, dadurch gekennzeichnet, daß ein Boden (38) der zweiten Aufnahmeführung (35) zugeordnet einem rotorseitigen Ende des Aufnahmegehäuses (20, 21) eine Öffnung aufweist, zur Kontaktierung zwischen dem Kontaktelement (14,15, 16, 17) und dem Kontaktteil (9, 10, 11, 12).

7. Elektromotor nach einem der vorhergehenden Ansprüche, dadurch gekennzeichnet, daß an dem Elektromotor ein Schiebekontakt für die Stromversorgung des Elektromotors ausgebildet ist, bestehend aus einem flächigen Steckerteil (16, 17) in Zusammenwirkung mit einem daran unter Vorspannung anliegenden motorseitigen Kontaktteil (10, 11).

8. Elektromotor nach einem der vorhergehenden Ansprüche, dadurch gekennzeichnet, daß in Reihe geschaltet bzgl. des Motorstromkreises in dem Motor ein Thermostatschalter (43) angeordnet ist.

9. Elektromotor nach Anspruch 8, dadurch gekennzeichnet, daß der Thermostatschalter (43) einen Temperaturfühler aufweist, der oberseitig der Statorwicklung (3) angeordnet ist.

10. Elektromotor nach Anspruch 8 oder 9, dadurch gekennzeichnet, daß der Thermostatschalter in eine Wickelabdeckung der Statorwicklung (3) eingerastet ist.

11. Elektromotor nach einem der vorhergehenden Ansprüche, dadurch gekennzeichnet, daß das Aufnahmegehäuse (20) zugleich ein Entstörungselement aufweist.

12. Elektromotor nach Anspruch 11, dadurch gekennzeichnet, daß an dem Aufnahmegehäuse (20) ein Entstörungskondensator (47) gehaltert ist.

13. Elektromotor nach Anspruch 12, dadurch gekennzeichnet, daß der Entstörungskondensator (47) einerseits in elektrisch leitender Verbindung zu einem das Aufnahmegehäuse (20) an dem Elektromotor, insbesondere dem Stator (1) halternden Befestigungselement (51) steht und andererseits in elektrisch leitender Verbindung zu dem Kontaktelement (14).

14. Elektromotor nach einem der Ansprüche 12 oder 13, dadurch gekennzeichnet, daß auf dem Aufnahmegehäuse (20) eine Aufnahmetasche (48) für den Entstörungskondensator (47) ausgebildet ist.

15. Elektromotor nach Anspruch 14, dadurch gekennzeichnet, daß seitlich zu der Aufnahmetasche (48) auf dem Aufnahmegehäuse (20) eine Schieberkontaktaufnahme (53) für einen Steckerkontakt (52) des Entstörungskondensators (47) ausgebildet ist.

16. Elektromotor nach einem der Ansprüche 1 bis 15, dadurch gekennzeichnet, daß etwa parallel zu der Aufnahmeführung für die Kohlenbürste (18) in dem Aufnahmegehäuse (20) eine Aufnahmeführung für einen Steckerkontakt (52) ausgebildet ist.

## Claims

1. Electric motor with a receiving arrangement having a reception housing (20, 21) for a carbon brush (18, 19), in which reception housing the carbon brush (18, 19) is longitudinally displaceable in a receiving guide (33), an elongate contact element (14, 15) being provided, which element is in electrically conducting connection with the carbon brush (18, 19) and in the contact position interacts with a contact part (9, 12) and can be secured in the reception housing (20, 21), the reception housing (20, 21) having furthermore a second receiving guide (34) for the contact element (14, 15), characterized in that the second receiving guide (34) is disposed below the first receiving guide (33), facing the contact part (9, 12) disposed on the stator winding, and in that, by displacing the contact element (14, 15) from a readiness position into a contact position, a contact is established with respect to the contact part (9, 12), which has a running-on surface.

2. Electric motor according to Claim 1, characterized in that the contact element comprising a flat sheet-metal part has at one end an approximately right-angled section (31, 32), with a compression spring (25, 26) and/or a carbon-brush pigtail (27, 28) being connected to the angled section (31, 32).

3. Electric motor according to one of the preceding claims, characterized in that the contact part (9, 12) is spring-biased.

4. Electric motor according to Claim 3, characterized in that the contact part (9, 10, 11, 12) has an intrinsically resilient contact bridge.

5. Electric motor according to one of the preceding claims, characterized in that the first and second receiving guides (33, 35) are separated by an intermediate base (34).

6. Electric motor according to one of the preceding claims, characterized in that a base (38) of the second receiving guide (35) has, associated with a rotor-side end of the reception housing (20, 21), an opening for establishing the contact between the contact element (14, 15, 16, 17) and the contact part (9, 10, 11, 12).

7. Electric motor according to one of the preceding claims, characterized in that a sliding contact for supplying power to the electric motor is formed on the electric motor, comprising a flat-formed plug part (16, 17) interacting with a contact part (10, 11) on the motor side which engages in a biased manner against the said plug part .

8. Electric motor according to one of the preceding claims, characterized in that a thermostatic switch (43) is provided in the motor, connected in series with respect to the motor circuit.

9. Electric motor according to Claim 8, characterized in that the thermostatic switch (43) has a temperature sensor which is disposed on the upper side of the stator winding (3).

10. Electric motor according to Claim 8 or 9, characterized in that the thermostatic switch is engaged in a coil covering of the stator winding (3).

11. Electric motor according to one of the preceding claims, characterized in that the reception housing (20) has at the same time an interference suppressing element.

12. Electric motor according to Claim 11, characterized in that an anti-interference capacitor (47) is secured on the reception housing (20).

13. Electric motor according to Claim 12, characterized in that the anti-interference capacitor (47) is on the one hand in electrically conducting connection with a fastening element (51) securing the reception housing (20) on the electric motor, in particular the stator (1), and on the other hand is in electrically conducting connection with the contact element (14).

14. Electric motor according to one of Claims 12 or 13, characterized in that a receiving pocket (48) for the anti-interference capacitor (47) is formed on the reception housing (20) .

15. Electric motor according to Claim 14, characterized in that a sliding contact receptacle (53) for a plug contact (52) of the anti-interference capacitor (47) is formed to the side of the receiving pocket (48) on the reception housing (20).

16. Electric motor according to one of Claims 1 to 15, characterized in that a receiving guide for a plug contact (52) is formed approximately parallel to the receiving guide for the carbon brush (18) in the reception housing (20).

## Revendications

1. Moteur électrique avec un dispositif support, présentant un boîtier de logement (20, 21) pour un balai de charbon (18, 19), boîtier de logement dans lequel le balai de charbon (18, 19) est déplaçable longitudinalement dans un guidage de logement (33), un élément de contact (14, 15) allongé, mis en liaison conductrice de l'électricité avec la balai de charbon (18, 19), étant prévu, qui, en position de contact, coopère avec une partie de contact (9, 12) et qui est susceptible d'être fixé dans le boîtier le logement (20, 21), où en outre le boîtier de logement (20, 21) présente un deuxième guidage de logement (34) pour l'élément de contact (14, 15), caractérisé en ce que le deuxième guidage de logement (34) est disposé au-dessous du premier guidage de logement (33), tourné vers la partie de contact (9, 12) disposée sur l'enroulement de stator, et en ce que, par un déplacement de l'élément de contact (14, 15), depuis une position prête en une position de contact, un contact est établi envers la partie de contact (9, 12) présentant une surface de défilement.

2. Moteur électrique selon la revendication 1, caractérisé en ce que l'élément de contact, constitué d'une pièce en tôle plate, présente à une extrémité un coudage (31, 32) à peu près à angle droit, un ressort de compression (25, 26) et/ou un câble à charbon (27, 28) étant relié au coudage (31, 32).

3. Moteur électrique selon l'une des revendications précédentes, caractérisé en ce que la partie de contact (9, 12) est placée sous une précontrainte élastique.

4. Moteur électrique selon la revendication 3, caractérisé en ce que la partie de contact (9, 10, 11, 12) présente un étrier de contact, ayant en soi une caractéristique élastique.

5. Moteur électrique selon l'une des revendications précédentes, caractérisé en ce que le premier et le deuxième guidages de logement (33, 35) sont séparés par un fond intermédiaire (34).

6. Moteur électrique selon l'une des revendications précédentes, caractérisé en ce qu'un fond (38) du deuxième guidage de logement (35), associé à une extrémité située côté rotor du boîtier de logement (20, 21), présente une ouverture pour la mise en contact entre l'élément de contact (14, 15, 16, 17) et la partie de contact (9, 10, 11, 12).

7. Moteur électrique selon l'une des revendications précédentes, caractérisé en ce que, sur le moteur électrique est réalisé un contact coulissant pour l'alimentation électrique du moteur électrique, constitué d'une partie à broches (16, 17) plate, en coopération avec une partie de contact (10, 11) située côté moteur, placée en appui sous précontrainte.

8. Moteur électrique selon l'une des revendications précédentes, caractérisé en ce qu'un interrupteur thermostatique (43), monté dans le moteur, est branché en série dans le circuit électrique du moteur.

9. Moteur électrique selon la revendication 8, caractérisé en ce que l'interrupteur thermostatique (43) présente une sonde de température, disposée en partie supérieure de l'enroulement de stator (3).

10. Moteur électrique selon la revendication 8 ou 9, caractérisé en ce que l'interrupteur thermostatique est encliqueté dans un recouvrement d'enroulement prévu pour l'enroulement de stator (3).

11. Moteur électrique selon l'une des revendications précédentes, caractérisé en ce que le boîtier de logement (20) présente simultanément un élément de déparasitage.

12. Moteur électrique selon la revendication 11, caractérisé en ce qu'un condensateur de déparasitage (47) est fixé sur le boîtier de logement (20).

13. Moteur électrique selon la revendication 12, caractérisé en ce que le condensateur de déparasitage (47) est, d'une part, en liaison conductrice de l'électricité envers un élément de fixation (51) maintenant le boîtier de logement (20) sur le moteur électrique, en particulier sur le stator (1), et, d'autre part, est en liaison conductrice de l'électricité envers l'élément de contact (14).

14. Moteur électrique selon l'une des revendication 12 ou 13, caractérisé en ce qu'une poche de logement (48) prévue pour le condensateur de déparasitage (47) est réalisée sur le boîtier de logement (20).

15. Moteur électrique selon la revendication 14, caractérisé en ce que, sur le côté de la poche de logement (48), est réalisé sur le boîtier de logement (20) un logement de contact coulissant (53) pour un contact à broche (52) du condensateur de déparasitage (47).

16. Moteur électrique selon l'une des revendication 1 à 15, caractérisé en ce qu'un guidage de logement pour un contact à broches (52) est réalisé à peu près parallèlement au guidage de logement prévue pour le balai à charbon (18) dans le boîtier de logement (20).
